# EUROPEAN PATENT SPECIFICATION

(11) **EP 2 858 965 B1**
(45) Date of publication and mention of the grant of the patent: **24.08.2016**
(21) Application number: 12725791.3
(22) Date of filing: 06.06.2012
(51) Int. Cl.: C04B 41/00, C04B 41/48, C09D 175/00, C08G 18/08, C08G 18/28, C08G 18/48, C08G 18/76, C08G 18/22, C08G 18/24, C08G 18/10, C08G 18/32, C08G 18/80

(54) **POLYURETHANE-BASED WATERPROOFING COMPOSITION FOR THE WATER-PROOFING OF CONCRETE STRUCTURES**
AUF POLYURETHAN BASIERENDE WASSERABDICHTUNGSZUSAMMENSETZUNG ZUR WASSERABDICHTUNG VON BETONSTRUKTUREN
COMPOSITION HYDROFUGE À BASE DE POLYURÉTHANES POUR L'IMPERMÉABILISATION DE STRUCTURES EN BÉTON

(43) Date of publication of application: 15.04.2015
(73) Proprietor: GCP Applied Technologies Inc., Cambridge, MA 02140 (US)
(72) Inventor: DOMANOWSKI, Wojciech, PL-03-226 Warszawa (PL); JANASZCZYK, Monika, PL-61-611 Poznan (PL)
(74) Representative: Uexküll & Stolberg
(86) International application number: PCT/EP2012/060651
(87) International publication number: WO 2013/182234

(56) References cited:
- EP-A1- 1 288 239
- EP-A2- 0 698 814
- CA-A1- 2 367 730
- DE-A1- 4 325 014
- US-A- 4 599 111
- US-A- 5 672 636
- US-A- 5 807 663
- US-A1- 2010 101 455
- US-A1- 2010 190 014
- US-A1- 2011 020 659
- US-A1- 2011 198 030

## Description

The present invention relates to waterproofing compositions based on polyurethanes, which are particularly useful for the waterproofing of concrete structures.

### Background of the Invention

Concrete structures, especially those which are immersed in the ground are subjected to a number of destructive factors, such as water, frost, carbon dioxide, hygroscopic salts. Hence, concrete structures are usually protected by covering them with waterproofing membranes. Besides preventing water infiltration, waterproofing membranes prevent structural damage to building components.

Currently, typical waterproofing membranes are available either in the form of sheeting materials or as waterproofing compositions which are applied to the structure as a liquid. After curing, liquid waterproofing compositions form an elastomeric seamless membrane which is impermeable to water. Many liquid waterproofing coatings are based on two-component polyurethane systems, comprising a polyol component and a polyisocyanate component, which upon reaction with each other form polyurethane polymers.

It is further known that humidity, which is usually entrapped in the concrete and emitted from its surface, reacts with the isocyanate component forming an amine and gaseous carbon dioxide (CO₂). This gaseous carbon dioxide may puncture the uncured membrane, thereby creating pinholes through which water may penetrate, or it may remain entrapped between the concrete surface and the waterproofing membrane, thereby deteriorating the adhesion of the waterproofing membrane to the concrete structure.

Thus, typical polyurethane-based waterproofing membranes require the utilization of a primer, such as a primer based on an epoxy resin, unsaturated acrylic resin, polyurethanes, etc. However, the use of primers is expensive and time consuming, especially due to installation cost, surface preparation and sanding. Hence, there is a desire to avoid the use of primers in liquid polyurethane-based waterproofing membranes, while still maintaining an acceptable adhesion of the waterproofing membrane to the concrete structure, and while avoiding the formation of pinholes caused by the reaction of humidity with the isocyanate component.

### Summary of the Invention

The problems mentioned above are solved by a waterproofing composition, including:
(a) at least one a branched isocyanate component comprising on average at least 2.3, preferably at least 2.5, more preferably at least 2.8 isocyanate groups per molecule wherein the isocyanate component is the reaction product of methylene diphenyl diisocyanate (MDI) and a multifunctional alcohol; and
(b) at least one hydroxycarboxylic acid component which is a hydroxy-group-containing fatty acid having 10 to 23 carbon atoms.

According to another aspect of the invention, the problems mentioned above are solved by a waterproofing composition, including:
(a) at least one a branched isocyanate component comprising on average at least 2.3, preferably at least 2.5, more preferably at least 2.8 isocyanate groups per molecule wherein the isocyanate component is the reaction product of a diisocyanate and a multifunctional alcohol;
(b) at least one polyol component;
(c) at least one latent amine component having formula (I) or (II); 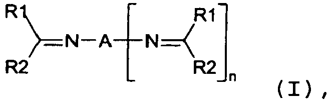 wherein A is selected from the group consisting of alkyl, cycloalkyl, aryl and alkylaryl, each R1 group is independently selected from the group consisting of hydrogen, alkyl and aryl, and each R2 group is independently selected the group consisting of alkyl and aryl, and n is 1, 2, or 3; 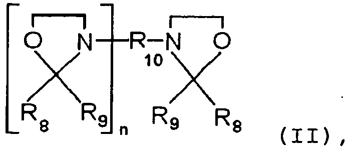 wherein each of R8 and R9 are individually selected from the group consisting of hydrogen and alkyl, R10 is an alkylidene group, an arylidene group or an arylalkylidene group optionally comprising at least two urethane groups or at least one carbonate diester group, and n is 1, 2, 3, or 4;
(d) at least one hydroxycarboxylic acid component which is a hydroxyl-group-containing fatty acid having 10 to 23 carbon atoms.

Upon application of the components of the waterproofing composition to the concrete structure, the at least one branched isocyanate component will react with the hydroxyl groups of the at least one polyol component, thereby causing the system to cure. Without wishing to be bound to any theory, it is believed that moisture entrained in or present at the surface of the concrete structure will first react with the at least one latent amine component, whereby the aldimino or ketimino groups present in the latent amine component are hydrolyzed to produce amino compounds and aldehyde or ketones. Since this hydrolysis reaction is reversible and the chemical equilibrium is toward the aldimine/ketimine side, it can be assumed that, in the absence of groups reactive toward amines, only some of the aldimino/ketimino groups are hydrolyzed. In the presence of isocyanate groups, the hydrolysis equilibrium shifts, since the hydrolyzed aldimino groups or ketimino group irreversibly react with the isocyanate groups. Thus, curing of the waterproofing composition on the liquid-concrete interface is accelerated by moisture and results in forming a thin cured film. The cured film acts as an *"in situ"* formed primer thereby avoiding the formation of pinholes and enhancing the adhesion of the waterproofing composition to the concrete wall. A similar process occurs, when instead of the previously mentioned compounds, multi-oxazolidynes are used.

Furthermore, it has been found that existing liquid systems do not always provide sufficient long term adhesion to concrete. It has been found that the combination of polyol component, branched isocyanate component, silane-based compound of formula (III), and hydroxyacid component increases long term adhesion of the waterproofing composition to the concrete wall, especially when immersed in water. It has surprisingly been found that hydroxy acids, especially hydroxyl-fatty acids, are very good adhesion promoters for concrete surfaces, for systems presented above and also for other chemically curable products including other types of polyurethanes and product and siloxane terminated prepolymers.

### Definitions

The chemical terms used above and throughout the description of the invention, unless specifically defined otherwise, shall be understood by one of ordinary skill in the art to have the following indicated meanings.

As used herein, the term "alkyl" or "alkylidene" generally refers to saturated hydrocarbon radicals, preferably having from one to twenty carbon atoms, more preferably, from one to eight carbon atoms in a straight or branched chain configuration, including methyl, ethyl, n-propyl, isopropyl, n-butyl, isobutyl, sec-butyl, tert-butyl, n-pentyl, n-hexyl, n-heptyl, n-octyl. For example, alkyl includes C₁₋₈alkyl, C₁₋₄alkyl. A C₁₋₈alkyl radical may be optionally substituted where allowed by available valences. An "alkylidene" group is distinguished from an "alkyl" group in that the former is divalent, whereas the latter is monovalent.

As used herein, the term "alkoxy" generally refers to saturated hydrocarbon radicals, preferably having from one to twenty, more preferably from one to eight carbon atoms, in a straight or branched chain configuration of the formula: -0-alkyl, including methoxy, ethoxy, n-propoxy, isopropoxy, n-butoxy, isobutoxy, sec-butoxy, tert-butoxy, n-pentoxy, n-hexoxy. For example, alkoxy includes C₁₋₈alkoxy, C₁₋₄alkoxy. A C₁₋₈alkoxy radical may be optionally substituted, where allowed, by available valences.

As used herein, the term "aryl" or "arylidene" generally refers to a monocyclic, bicyclic or polycyclic aromatic carbon atom ring structure radical, including phenyl, naphthyl, anthracenyl, fluorenyl, azulenyl, phenanthrenyl. An aryl radical may be optionally substituted where allowed by available valences. Preferably the aryl group contains 6 to 14, more preferably 6 to 10 carbon atoms. An "arylidene" group is distinguished from an "aryl" group in that the former is divalent, whereas the latter is monovalent.

As used herein, the term "substituent" means positional variables on the atoms of a core molecule that are substituted at a designated atom position, replacing one or more hydrogens on the designated atom, provided that the designated atom's normal valency is not exceeded, and that the substitution results in a stable compound. Combinations of substituents and/or variables are permissible only if such combinations result in stable compounds. It should also be noted that any carbon as well as heteroatom with valences that appear to be unsatisfied as described or shown herein is assumed to have a sufficient number of hydrogen atom(s) to satisfy the valences described or shown.

### Detailed Description of the Invention

According to an aspect of the invention, the isocyanate component comprises on average at least 2.3, preferably at least 2.5, most preferably at least 2.8 isocyanate groups per molecule. Preferably the isocyanate component comprises on average up to 100, more preferably up to 50, and even more preferably up to 10, such as up to 3.5 isocyanate groups per molecule. Preferably, the isocyanate component is added in an amount such that the ratio of isocyanate groups to hydrogen donors (known in the polyurethane industry as the "index") is from 0.9 to 1.4. The isocyanate component may, for example, be the reaction product of a diisocyanate and a multifunctional alcohol. Preferably, the diisocyanate is selected from the group consisting of 4-methyl-1,3-phenylene diisocyanate, 2-methyl-1,3-phenylene diisocyanate, 4,4'-diphenylmethane diisocyanate, 2,4'-diphenylmethane diisocyanate, 1,3-phenylene diisocyanate, 1,4-phenylene diisocyanate, 1,6-hexamethylene diisocyanate, 2,2,4-trimethyl-1,6-hexamethylene diisocyanate, 2,4,4-trimethyl-1,6-hexamethylene diisocyanate, 1,12-dodecamethylene diisocyanate, cyclohexane-1,3-diisocyanate, cyclohexane-1,4-diisocyanate, 1-isocyanato-3,3,5-trimethyl-5-isocyanato-methylcyclohexane, perhydro-2,4'- diphenylmethane diisocyanate, perhydro-4,4'-diphenylmethane diisocyanate, 1,3-etramethylxylylene diisocyanate, 1,4-tetramethylxylylene diisocyanate, and any mixture of the aforementioned isocyanates. Preferably, the multifunctional alcohol has two, three or four hydroxyl groups, and is more preferably selected from the group consisting of polyalkylene glycols, neopentyl glycols, glycerol, trimethylol propane, hexane triol, alkyd resin, and mixtures of the afore-mentioned multifunctional alcohols. The ratio of diisocyanate to multifunctional alcohol depends on the number of hydroxyl groups present in the multifunctional alcohol. An excess of isocyanate groups in relation to alcohol groups should be appropriate to insure that the branched isocyanate component comprises on average at least 2.3, preferably at least 2.5, most preferably least 2.8 isocyanate groups per molecule.

For example, the isocyanate component may be the reaction product of 2-(hydroxymethyl)-2-ethylpropane-1,3-diol and a commercial grade methylene diphenyl disocyanate (MDI), such as branded Desmodur^{®} LS2424 (available from Bayer AG) containing approximately 55 wt.% 2,4'-diphenylmethane diisocyanate and 45 wt.% 4,4'-diphenylmethane diisocyanate.

Alternatively or additionally, the isocyanate component is selected from oligomeric isocyanates having more than two isocyanate groups per molecule. Preferred are compounds of formula (V): 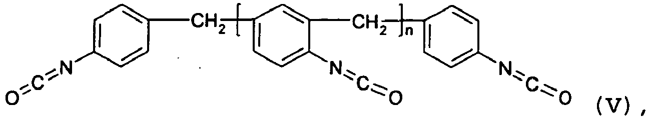 wherein n is 1, 2, 3 or 4. The latter isocyanates are commercially available as polymeric MDI's (PMDI). Examples of suitable PMDI's or mixtures of MDI's and PMDI's are Desmodur^{®} VKS10 (available from Bayer AG) containing 4,4'-diphenyl-methane diisocyanate (MDI) in admixture with isomers and higher functional homologues (PMDI), and Desmodur^{®} E-21 (available from Bayer AG) containing aromatic polyisocyanate prepolymer based on diphenylmethane diisocyanate (functionality of 2.8, NCO 16%).

According to another aspect of the invention, the hydroxyl groups of the polyol component may be attached to polyether, polyester or polybutadiene oligomers. Preferably, the polyol comprises a combination of high and low molecular weight polyols, such as those comprising on average from 2 to 4 hydroxyl groups per molecule. It is preferred that the polyol component is a polyetherol or a polyesterol component. Most preferably, the polyol component is a polybutadiene-based polyol.

According to another aspect of the invention, the polyetherpolyol or polyesterol component has a number average molecular weight of from 300 to 6000. Preferably, the polyol or polyesterol component comprises on average from 2 to 3 hydroxyl groups per molecule.

Suitable polyol components are for example castor oil derived polyol such as Albodur^{®} Lv 43008 (available from Alberdingk Boley), polybutadiene backbone polyol such as Poly bd R 45HTLO (available from Cray Valley), Desmophene^{®} 2060 Bd or a linear polypropylene polyether polyol such as Desmophene^{®} 1262 (both available from Bayer AG, Germany).

According to an aspect of the invention, the amount of polyol component is selected such that it makes up of 50-80% of the total equivalent of hydrogen donors in the total composition.

The latent amine component of formula (I) 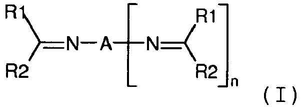 wherein A is selected from the group consisting of alkyl, cycloalkyl, aryl and alkylaryl, each R1 group is independently selected from the group consisting of hydrogen, alkyl and aryl, each R2 group is independently selected the group consisting of alkyl and aryl, and n is an integer from 1 to 3, is preferably the condensation product of a diamine, triamine, or tetraamine compound with aldehydes and/or ketones. According to an aspect of the present invention the aldehyde is selected from the group consisting of aliphatic and cycloaliphatic aldehydes. Examples of suitable aldehydes are propanal, trimethylacetaldehyde, isobutyraldehyde, hexanal, 2-ethylhexanal, 2-methylbutanal, 2-ethylbutanal, octylaldehyde, valeraldehyde, isovaleraldehyde, 2-methylvaleraldehyde, 2,3-dimethylvaler-aldehyde, 2-methylundecanal, cyclohexylcarboxaldehyde, methoxyacetaldehyde, 2-alkoxy-2-methylpropanals such as 2-methoxy-2-methylpropanal, 2-hydroxy-2-methylpropanal, esters of organic carboxylic acids and 2-hydroxy-2-methylpropanal, such as 2-acetoxyisobutyraldehyde, 3-alkoxy-2,2-dimethylpropanals such as 3-n-butoxy-2,2-dimethylpropanal, esters of 2,2-dimethyl-3-hydroxypropanal and short-chain organic carboxylic acids, such as 2,2-dimethyl-3-acetyloxypropanal or 2,2-dimethyl-3-isobutyroxypropanal, cyclopropanecarboxaldehyde, 9-ethyl-3-carbazolecarboxaldehyde, 10-methylanthracene-9-carboxaldehyde, pyrenecarboxaldehyde, benzaldehyde, o-, m- or p-tolylaldehyde, 2- or 4-methylbenzaldehyde, 2- or 4-ethylbenzaldehyde, 2- or 4-propylbenzaldehyde, 2- or 4-butylbenzaldehyde, 2,4-dimethylbenzaldehyde, 2,4,5-trimethylbenzaldehyde, p-anis-aldehyde, 3-methyl-p-anisaldehyde, m- or p-ethoxybenzaldehyde, m- or p-phenoxybenzaldehyde, nicotinaldehyde, terephthaldehyde, isophthaldehyde and diphenylacetaldehyde, and mixtures of the aforementioned aldehydes. Suitable ketones includes acetone, methyl ethyl ketone, diethyl ketone, methyl propyl ketone, methyl isopropyl ketone, methyl isobutyl ketone, diisopropyl ketone, phenyl methyl ketone, methyl n-butyl ketone, methyl sec-butyl ketone, methamyl ketone, diphenyl ketone, pinacolone, methylhexanone, isobutylheptyl ketone, methylcyclohexanone, cyclopentanone, cycloheptanone, acetophenone, phenyl ethyl ketone, and 3,3,5-trimethylocyclohexanone.

Suitable amines are compounds of formula (VI):

H₂N-[A-NH₂]ₙ (VI),

wherein A is selected from the group consisting of alkyl, cycloalkyl, aryl and alkylaryl, and n is an integer from 1 to 3. Suitable amines are, for example ethylene diamine, ethylene glycol diamine, propylene glycol diamine, and cycloaliphatic diamines. Suitable latent amine components are, for example, described in European Patent 0 531 249.

Most preferably, latent amine component is Vestamin^{®} A139 (available from Evonik Industries, Germany) or a difunctional polyetheramine having oxyropylene units in the backbone and a molecular weight of about 2000 such as Jeffamine^{®} D2000 (available from Huntsman Corporation, U.S.A.).

According to an alternative embodiment of the invention the amine is of a polyoxazolidyne type of Formula (II). Such compounds can prepared by condensation of a N-hydroxyalkylethanolamine, preferably diethanolamine, with a corresponding ketone or aldehyde, in a first step, according to the following reaction scheme: 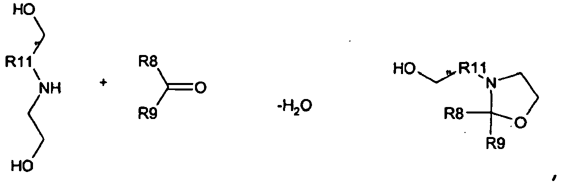 wherein R8 and R9 are defined as previously, and R11 is an alkylidene group, preferably having from 1 to 20 carbon atoms, more preferably from 1 to 5 carbon atoms. Suitable ketones and aldehydes are exemplified above with regard to the latent amine component of formula (I).

After purification from water and the remaining carbonyl compound, said condensation product, containing oxazolidyne and hydroxyl groups, is reacted, in a second step with multifunctional compounds, which are able to react with hydroxyl groups to yield a compound of Formula (II). Preferred multifunctional compounds are multifunctional alkyl isocyanates, aryl isocyanates and alkylaryl isocyanates and their derivatives as described with regard to the isocyanate component. Reaction of condensation product, containing oxazolidyne and hydroxyl groups with said multifunctional alkyl isocyanates, aryl isocyanates or alkylarylisocyanates will lead to compounds of Formula (II) wherein R10 is an alkylidene group or an alkylarylidene group comprising at least two urethane groups according to the following reaction scheme: 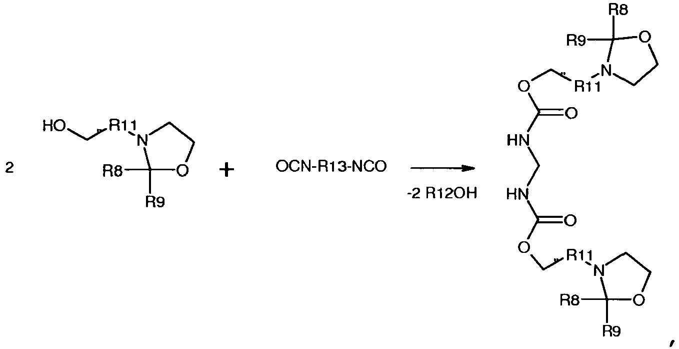 wherein R8, R9 and R11 are defined as previously, and R13 is an alkyl group, an aryl group or an alkylaryl group.

Alternatively the oxazolidyne hydroxyl groups, may be transesterified with carbonates of low molecular weight alcohols to yield compounds of Formula (II) wherein R10 is an alkylidene group comprising at least one carbonate group according to the following reaction scheme: 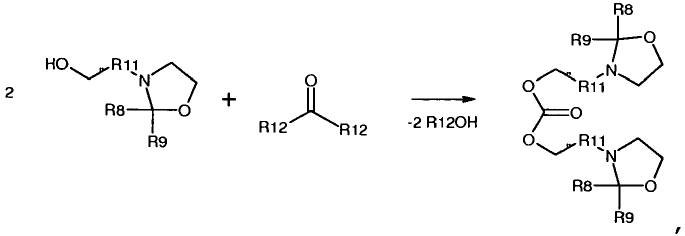 wherein R8, R9 and R11 are defined as previously, and R12 is an alkyl group, preferably having from 1 to 12 carbon atoms, more preferably from 1 to 6 carbon atoms, and most preferably from 1 to 2 carbon atoms. A preferred amine of Formula (II) is oxazolidineethanol,2-(1-methylethyl)-3,3' carbonate or the reaction product of hexamethylene diisocyanate diurethane with 2-isopropyl-3-(2-hydroxyethyl)oxadolidine.

The preferred latent amines of Formula (II) mentioned above are commercially available as Hardener VP LS 2959 and Hardener OZ (both available from Bayer, Germany), Incozol^{®} LV and Incozol^{®} 4 (available from Incorez, Lancashire, UK)

According to another aspect of the invention, the amount of latent amine component is selected such that it makes up 10-40% of the total equivalent of hydrogen donors in the total composition.

According to another aspect of the invention, the composition comprises a silane-based compound of formula (III) 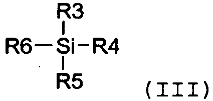 wherein R3, is an alkoxy group having 1 to 8 carbon atoms; and R4, R5, R6, are each independently selected from the group consisting of: -(R7)ₙ-Z, wherein Z is selected from the group consisting of amino, epoxy, mercapto, isocyanate, ureido, and imidazole, R7 is an aliphatic, alicyclic or aromatic group, and n is 0 to 20; an alkoxy group having 1 to 8 carbon atoms; an alkyl group having 1 to 8 carbon atoms.

Preferably the alkoxy groups R3, R4, R5 and/or R6 are selected from the group consisting of methoxy, ethoxy, propoxy, and methoxyethoxy. Preferred organosilanes are aminosilanes, epoxysilanes, mercaptosilanes, vinylsilanes, ureidosilanes, imidazolsilanes and isocyanatosilahes. Preferred silanes are selected from the group consisting of (3-amino-propyl)trietokysilane, 2,3-glycidoxypropyltrimethoxysilane and 3-mercaptopropyltrimethoxy-silane.

According to another aspect of the invention, a hydroxycarboxylic acid component is used. The hydroxycarboxylic acid component has the formula (IV):

(HO)ₙX(COOH)ₘ (IV),

wherein m and n are independently 1, 2, or 3, and X is an organic radical that comprises between 1 and 22 carbon atoms. Preferably, X is an aliphatic, cycloaliphatic, or aromatic moiety. Particularly preferred hydroxycarboxylic acids are hydroxy-group-containing fatty acids having 10 to 23 carbon atoms. Particularly preferred are 12-hydroxy-9-cis-octadecenoic acid and 12-hydroxy-octadecanoic acid. Further suitable hydroxycarboxylic acids are fatty acids obtained by hydroxylation of unsaturated fatty acids such as oleic acid or linoleic acid, or hydroxylated plant-derived oil fatty acids such as a hydroxylated soyabean oil fatty acid isolated after hydroxylating soybean oil.

According to another aspect of the invention, the amount of hydroxycarboxylic acid component is selected such that it makes up 0.1-10% of the total equivalent of hydrogen donors in the total composition.

Furthermore, the multi-component waterproofing composition according to the present invention may contain further ingredients common for polyurethane art such as organic or inorganic fillers, catalysts, defoamers, dyes, pigments, plasticizers, oils, drying agents, rheological additives.

Fillers which are useful in the present waterproofing compositions include silica, bentonites, chalk, talc, calcium silicate, wollastonite, asbestine, barium sulfate, graphite, hydrated alumina, chrysotile, serpentine, pearlite, vermiculite, mica, crocidolite, zirconium silicate, barium zirconate, calcium zirconium silicate, magnesium zirconium silicate, glass beads, fiberglass, titanium dioxide, PMF mineral fiber, nylon fiber, polyester fiber, cellulose fiber, polypropylene fiber could be used. various calcium carbonates, such as whiting, calcite, precipitated calcium carbonate, dolomite, alumino silicates, such as kaolin, silica fillers, such as HiSil^{®}, Min U Sil^{®}, Cab-O Sil^{®}, fibrous talcs, reinforcing and nonreinforcing carbon blacks, natural organic fillers, titanium dioxide, polyvinyl chloride, or flake-type fillers. Other suitable fillers include various hydrated magnesium silicates and substituted magnesium silicates such as amphiboles and minerals of the serpentine group.

Catalysts which are useful in the present waterproofing compositions include organometallic compounds containing bismuth, tin, mercury, zinc or lead or salts of these metals with organic acids. Amine catalysts can also be used in the present waterproofing compositions.

Plasticizers which are useful in the present waterproofing compositions include esters of organic carboxylic acids or their anhydrides, phthalates, such as dioctyl phthalate or diisodecyl phthalate, adipates, such as dioctyl adipate, organic sulfonic esters, polybutenes, coumarone-indene liquid resin and other compounds which do not react with isocyanates.

The water proofing compositions according to the present invention are applied as a liquid onto the concrete structure, which upon mixing the different components will start to cure. Preferably, the multi-component is delivered as a multi-component composition, wherein the isocyanate component is separate from the polyol component; from the latent amine component; and, if present in the composition, from the hydroxyacid component. Preferably the multi-component composition is present as a two-component composition, wherein the indiviual components are present in liquid form, wherein a first component comprises (a) the at least one a branched isocyanate component; and wherein a second component comprises (b) the at least one polyol component; (c) the at least one latent amine component having formula (I) or (II); and (d) the at least one silane-based compound of formula (III) and/or the at least one hydroxyacid component, wherein the individual components are as described above. Alternatively, the multi-component multi-component composition is present as a three-component composition, wherein the individual components are present in liquid form, wherein a first component comprises (a) the at least one a branched isocyanate component; wherein a second component comprises (b) the at least one polyol component; (c) the at least one latent amine component having formula (I) or (II); and wherein a third component comprises (d) the at least one silane-based compound of formula (III) and/or the at least one hydroxyacid component, wherein the individual components are as described above.

The multiple-component waterproofing compositions can be applied in very different ways to a concrete structure. For Example, the individual liquid components mentioned above, are kept in closed, separated drums from where they are pumped through hoses to a spraying gun. In said spraying gun, the individual components are mixed, and the mixed composition is sprayed onto the concrete structure. Such way of application is useful for large areas. Alternatively, the individual liquid components are combined and mixed together in one vessel. After mixing is completed, it will usually take some time until the mixed composition is completely cured. The mixed composition is then manually applied onto the surface of the concrete structure. Usually the mixed composition will be applied with rollers onto a horizontal surface, and with trowels or spatulas onto a vertical surface.

Generally, the mixed composition is applied to a thickness of from 2 to 5 mm onto the concrete wall. A thickness of 2 mm of the coating is commonly approved as waterproofing standard. The membrane could be used as self independent waterproofing membrane, but also as accessory to sheet applied membranes to fill the gap in places where sheets could not be applied due to complicated shape of the substrate.

The present invention is further illustrated by the following non-limiting examples.

### Example 1: Preparation of a diisocyanate component

137.4 g of 2-(hydroxymethyl)-2-ethylpropane-1,3-diol were reacted with 826 g of a commercial grade MDI (branded Desmodur^{®} LS2424) containing approximately 55 wt.% 2,4'-MDI and 45 wt.% 4,4'-MDI. The reaction product comprises on average 2.77 isocyanate groups per molecule. The reaction product will be referred-to hereinafter as Curative 1.

### Example 2: Preparation of a latent amine component

An aldimine of polypropylene oxide diamine having a molecular mass of 2060, commercially available under the tradename as Jeffamine^{®} D2000 from Hunstman Corp., Texas, U.S.A., and isobutyraldehyde was prepared in following way: to a flask containing 206 g polypropylene oxide diamine (0,2 of equivaqlents) 15 g of isobutyraldehyde (0,208 equivalents) were added dropwise. The mixture was stirred at a temperature of 50°C for 12 hrs under nitrogen atmosphere. After reaction was completed the water and the excess of aldehyde was distilled off at a reduced pressure of 1 mm of Hg.

### Example 3: Preparation of a polyol component

The following ingredients were mixed:
30.0 parts Desmophene^{®} 1262 - linear polypropylene polyol;
46.1 parts Blocked amine 1;
5.0 parts Sylosiv^{®} A-10 - crystalline aluminosilicate zeolite available from W.R. GRACE;
0.5 parts Byk A530 - antifoam agent available from BYK AG;
0.01 parts Coscat^{®} BiZn - mixture of bismuth and zink organic salts available from Vertellus Performance Materials;
40.0 parts Novares^{®} T1 10 - aromatic hydrocarbon resin based on petroleum-derived C₉ fractions available from Ruetgers AG;
10.0 parts Aerosil^{®} 200 - hydrophilic fumed silica with a specific surface of 200 m²/g available from Evonik Industries; 40.0 parts Magsil Saphire^{®} talc;
2.0 parts ricinoleic acid; and
1.0 part (3-aminopropyl)-triethoxysilane.

The polyol mixture is referred-to hereinafter as Polyol 1.

Polyol 1 can e.g. be cured with 44.5 parts of Suprasec^{®} 2237 or with 32.1 parts of Desmodur^{®} VKS 10 (not according to the invention) or 64.5 parts of Curative 1 described above.

### Example 4: Preparation of a waterproofing composition

First Component:
   167.6 g Desmodur^{®} E-21 MDI isocyanate prepolymer (available from Bayer AG), having a functionality of 2.8; 16% NCO.
Second Component:
   100 g Desmophen^{®} 1262 BD (eq = 260) polyether polyol (available from Bayer AG);
   21.4 g Vestamine^{®} A-139 cycloaliphatic amine blocked by an isobutyr aldehyde supplied by Evonik Industries;
   0.3 g Byk A 535 antifoam agent supplied by BYK AG;
   0.01 g Coscat^{®} Bi/Zn catalyst supplied by Vertelius;
   20 g Novares^{®} n-1 800 - aromatic hydrocarbon resin based on petroleum-derived C₉ fractions supplied by Ruetgers AG;
   100 g Winnofil^{®} SPM - ultrafine coated precipitated calcium carbonate supplied by Solvay;
   2.0 g of Ricinoleic acid supplied by Aldrich.

## Claims

1. A waterproofing composition comprising:
(a) at least one branched isocyanate component comprising on average at least 2.3 isocyanate groups per molecule wherein the isocyanate component is the reaction product of methylene diphenyl diisocyanate (MDI) and a multifunctional alcohol; and
(b) at least one hydroxycarboxylic acid component which is a hydroxy-group-containing fatty acid having 10 to 23 carbon atoms.

2. A waterproofing composition, comprising:
(a) at least one a branched isocyanate component comprising on average at least 2.3 isocyanate groups per molecule wherein the isocyanate component is the reaction product of a diisocyanate and a multifunctional alcohol;
(b) at least one polyol component;
(c) at least one latent amine component having formula (I) or (II); 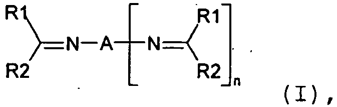 wherein A is selected from the group consisting of alkyl, cycloalkyl, aryl and alkylaryl, each R1 group is independently selected from the group consisting of hydrogen, alkyl and aryl, and each R2 group is independently selected the group consisting of alkyl and aryl, and n is 1, 2, or 3; 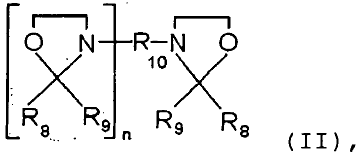 wherein each of R8 and R9 are individually selected from the group consisting of hydrogen and alkyl, R10 is an alkylidene group, an arylidene group or an arylalkylidene group optionally comprising at least two urethane groups or at least one carbonate ester, and n is 1, 2, 3, or 4;
(d) at least one hydroxycarboxylic acid component which is a hydroxy-group-containing fatty acid having 10 to 23 carbon atoms.

3. The waterproofing composition according to claim 2, further comprising at least one silane-based compound of formula (III): 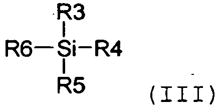 wherein R3, is an alkoxy group having 1 to 8 carbon atoms; and R4, R5, R6, are each independently selected from the group consisting of -(R7)ₙ-Z, wherein Z is selected from the group consisting of amino, epoxy, mercapto, isocyanate, ureido, and imidazole, R7 is an aliphatic, alicyclic or aromatic group, and n is 0 to 20; an alkoxy group having 1 to 8 carbon atoms; an alkyl group having 1 to 8 carbon atoms.

4. The waterproofing composition according to claim 2 or 3, wherein the isocyanate component is the reaction product of a methylene diphenyl diisocyanate (MDI) and a multifunctional alcohol.

5. The waterproofing composition according to any of claims 2 or 3, wherein the diisocyanate is selected from the group consisting of 4-methyl-1,3-phenylene diisocyanate, 2-methyl-1,3-phenylene diisocyanate, 4,4'-diphenylmethane diisocyanate, 1,3-phenylene diisocyanate, 1,4-phenylene diisocyanate, 1,6-hexamethylene diisocyanate, 2,2,4-trimethyl-1,6-hexamethylene diisocyanate, 2,4,4-trimethyl-1,6-hexamethylene diisocyanate, 1,12-dodecamethylene diisocyanate, cyclohexane-1,3-diisocyanate, cyclohexane-1,4-diisocyanate, 1-isocyanato-3,3,5-trimethyl-5-isocyanato-methylcyclohexane, perhydro-2,4'-diphenylmethane diisocyanate, perhydro-4,4'-diphenylmethane diisocyanate, 1,3-etramethylxylylene diisocyanate, 1,4-tetramethylxylylene diisocyanate, and any mixture of the aforementioned isocyanates.

6. The waterproofing composition according to any of the previous claims, wherein the multifunctional alcohol is selected from the group consisting of polyalkylene glycols, neopentyl glycols, glycerol, trimethylol propane, hexane triol, alkyd resin, and mixtures of the aforementioned multifunctional alcohols.

7. The waterproofing composition according to any of claims 2 to 5, wherein polyol component is a polyetherol or a polyesterol component.

8. The waterproofing composition according to claim 7, wherein polyetherpolyol or the polyesterol component has
a weight average molecular weight of from 500 to 6000 and comprises on average from 2 to 3 hydroxyl groups per molecule.

9. The waterproofing composition according to any of claims 2 to 8, wherein the amount of polyol component is selected such that it makes up of 50-80% of the total equivalent of hydrogen donors in the total composition.

10. The waterproofing composition according to any of claims 2 to 9, wherein the latent amine component is the condensation product of a multiamine compound with aldehydes and/or ketones.

11. The waterproofing composition according to any of claims 2 to 10, wherein amount of latent amine component is selected such that it makes up 10-40% of the total equivalent of hydrogen donors in the total composition.

12. The waterproofing composition according to any of the preceding claims, wherein the hydroxycarboxylic acid component is selected from 12-hydroxy-9-cis-octadecenoic acid and 12-hydroxy-octadecanoic acid.

13. The waterproofing composition according to any of the preceding claims, wherein the amount of hydroxycarboxylic acid component is selected such that it makes up 0.1-10% of the total equivalent of hydrogen donors in the total composition.

14. The waterproofing composition according to any of the preceding claims, further comprising organic and/or inorganic fillers, catalysts, defoamers, dyes, pigments, plasticizers, oils, drying agents, and/or rheological additives.

15. The waterproofing composition according to any of claims 2 to 14, where the isocyanate component is added in an amount such that the ratio of isocyanate groups to hydrogen donors is from 0.9 to 1.4.

16. A method of waterproofing a concrete structure, wherein a waterproofing composition according to any of the preceding claims is applied as in the form of a liquid to a concrete structure.

## Patentansprüche

1. Wasserdichtungszusammensetzung, umfassend:
(a) mindestens eine verzweigte Isocyanatkomponente, die durchschnittlich mindestens 2,3 Isocyanatgruppen pro Molekül umfasst, wobei die Isocyanatkomponente das Reaktionsprodukt aus Methylendiphenyldiisocyanat (MDI) und einem multifunktionellen Alkohol ist, und
(b) mindestens eine Hydroxycarbonsäurekomponente, die eine Hydroxygruppen-enthaltene Fettsäure mit 10 bis 23 Kohlenstoffatomen ist.

2. Wasserdichtungszusammensetzung, umfassend:
(a) mindestens eine verzweigte Isocyanatkomponente, die durchschnittlich mindestens 2,3 Isocyanatgruppen pro Molekül umfasst, wobei die Isocyanatkomponente das Reaktionsprodukt aus einem Diisocyanat und einem multifunktionellen Alkohol ist,
(b) mindestens eine Polyolkomponente,
(c) mindestens eine latente Aminkomponente mit der Formel (I) oder (II) 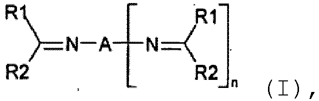 in der A aus der Gruppe bestehend aus Alkyl, Cycloalkyl, Aryl und Alkylaryl ausgewählt ist, jede R1-Gruppe unabhängig aus der Gruppe bestehend aus Wasserstoff, Alkyl und Aryl ausgewählt ist, jede R2-Gruppe unabhängig aus der Gruppe bestehend aus Alkyl und Aryl ausgewählt ist und n 1, 2 oder 3 ist, 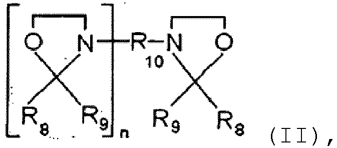 in der jedes der R8 und R9 einzeln aus der Gruppe bestehend aus Wasserstoff und Alkyl ausgewählt ist, R10 eine Alkylidengruppe, eine Arylidengruppe oder eine Arylalkylidengruppe ist, die gegebenenfalls mindestens zwei Urethangruppen oder mindestens einen Carbonatester umfasst, und n 1, 2, 3 oder 4 ist,
(d) mindestens eine Hydroxycarbonsäurekomponente, die eine Hydroxygruppen-enthaltene Fettsäure mit 10 bis 23 Kohlenstoffatomen ist.

3. Wasserdichtungszusammensetzung nach Anspruch 2, die ferner mindestens eine silanbasierte Verbindung der Formel (III) umfasst 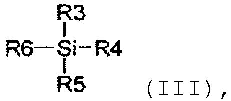 in der R3 eine Alkoxygruppe mit 1 bis 8 Kohlenstoffatomen ist und R4, R5 und R6 unabhängig aus der Gruppe bestehend aus -(R7)ₙ-Z, in der Z ausgewählt ist aus der Gruppe bestehend aus Amino, Epoxy, Mercapto, Isocyanat, Ureido und Imidazol, R7 eine aliphatische, alicyclische oder aromatische Gruppe ist und n 0 bis 20 ist, und einer Alkoxygruppe mit 1 bis 8 Kohlenstoffatomen und einer Alkylgruppe mit 1 bis 8 Kohlenstoffatomen ausgewählt ist.

4. Wasserdichtungszusammensetzung nach Anspruch 2 oder 3, wobei die Isocyanatkomponente das Reaktionsprodukt aus Methylendiphenyldiisocyanat (MDI) und einem multifunktionellen Alkohol ist.

5. Wasserdichtungszusammensetzung nach einem der Ansprüche 2 oder 3, wobei das Diisocyanat aus der Gruppe bestehend aus 4-Methyl-1,3-phenylendiisocyanat, 2-Methyl-1,3-phenylenediisocyanat, 4,4'-Diphenylmethandiisocyanat, 1,3-Phenylenediisocyanat, 1,4-Phenylenediisocyanat, 1,6-Hexamethylendiisocyanat, 2,2,4-Trimethyl-1,6-hexamethylendiisocyanat, 2,4,4-Trimethyl-1,6-hexamethylendiisocyanat, 1,12-Dodecamethylendiisocyanat, Cyclohexan-1,3-diisocyanat, Cyclohexan-1,4-diisocyanate, 1-Isocyanato-3,3,5-trimethyl-5-isocyanatomethylcyclohexan, Perhydro-2,4'-diphenylmethandiisocyanat, Perhydro-4,4'-diphenylmethandiisocyanat, 1,3-Tetramethylxylylendiisocyanat, 1,4-Tetramethylxylylenediisocyanat und irgendeiner Mischung der vorgenannten Isocyanate ausgewählt ist.

6. Wasserdichtungszusammensetzung nach einem der vorhergehenden Ansprüche, wobei der multifunktionelle Alkohol aus der Gruppe bestehend aus Polyalkylenglycolen, Neopentylglycolen, Glycerin, Trimethylolpropan, Hexantriol, Alkydharz und Mischungen der vorgenannten multifunktionellen Alkoholen ausgewählt ist.

7. Wasserdichtungszusammensetzung nach einem der Ansprüche 2 bis 5, wobei die Polyolkomponente eine Polyetherol- oder eine Polyesterolkomponente ist.

8. Wasserdichtungszusammensetzung nach Anspruch 7, wobei die Polyetherpolyol- oder die Polyersterolkomponente ein gewichtsgemitteltes Molgewicht von 500 bis 6000 aufweist und durchschnittlich 2 bis 3 Hydroxygruppen pro Molekül umfasst.

9. Wasserdichtungszusammensetzung nach einem der Ansprüche 2 bis 8, wobei die Menge der Polyolkomponente so gewählt ist, dass sie 50-80% der gesamten entsprechenden Menge der Wasserstoffdonoren in der gesamten Zusammensetzung ausmacht.

10. Wasserdichtungszusammensetzung nach einem der Ansprüche 2 bis 9, wobei die latente Aminkomponente das Kondensationsprodukt aus einer Multiaminverbindung und Aldehyden und/oder Ketonen ist.

11. Wasserdichtungszusammensetzung nach einem der Ansprüche 2 bis 10, wobei die Menge der latenten Aminkomponente so gewählt ist, dass sie 10-40% der gesamten entsprechenden Menge der Wasserstoffdonoren in der gesamten Zusammensetzung ausmacht.

12. Wasserdichtungszusammensetzung nach einem der vorhergehenden Ansprüche, wobei die Hydroxycarbonsäurekomponente aus 12-Hydroxy-9-cis-octadecensäure und 12-Hydroxyoctadecansäure ausgewählt ist.

13. Wasserdichtungszusammensetzung nach einem der vorhergehenden Ansprüche, wobei die Menge der Hydroxycarbonsäurekomponente so gewählt ist, dass sie 0,1-10% der gesamten entsprechenden Menge der Wasserstoffdonoren in der gesamten Zusammensetzung ausmacht.

14. Wasserdichtungszusammensetzung nach einem der vorhergehenden Ansprüche, die ferner organische und/oder anorganische Füllstoffe, Katalysatoren, Entschäumer, Farbstoffe, Pigmente, Weichmacher, Öle, Trocknungsmittel und/oder rheologische Additive umfasst.

15. Wasserdichtungszusammensetzung nach einem der Ansprüche 2 bis 14, wobei die Isocyanatkomponente in einer solchen Menge hinzugegeben ist, das das Verhältnis der Isocyanatgruppen zu den Wasserstoffdonoren 0,9 bis 1,4 beträgt.

16. Verfahren zur Wasserabdichtung einer Betonstruktur, bei dem eine Wasserdichtungszusammensetzung gemäß einem der vorhergehenden Ansprüche in Form einer Flüssigkeit auf eine Betonstruktur aufgetragen wird.

## Revendications

1. Composition hydrofuge comprenant :
(a) au moins un composant isocyanate ramifié, comprenant en moyenne au moins 2.3 groupes isocyanate par molécule, le composant isocyanate étant le produit de réaction de diisocyanate de méthylènediphényle (MDI) et d'un alcool multifonctionnel; et
(b) au moins un composant acide hydroxycarboxylique qui est un acide gras contenant un groupe hydroxy ayant 10 à 23 atomes de carbone.

2. Composition hydrofuge, comprenant :
(a) au moins un composant isocyanate ramifié comprenant en moyenne au moins 2,3 groupes isocyanate par molécule, le composant isocyanate étant le produit de réaction d'un diisocyanate et d'un alcool multifonctionnel ;
(b) au moins un composant polyol ;
(c) au moins un composant amine latente ayant la formule (I) ou (II) ; 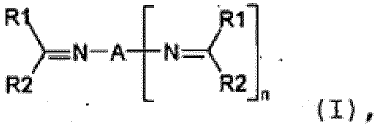 dans laquelle A est choisi dans le groupe constitué par alkyle, cycloalkyle, aryle et alkylaryle, chaque groupe R1 est indépendamment choisi dans le groupe constitué d'hydrogène, alkyle et aryle, et chaque groupe R2 est choisi indépendamment dans le groupe constitué d'alkyle et aryle, et n est égal à 1, 2 ou 3 ; 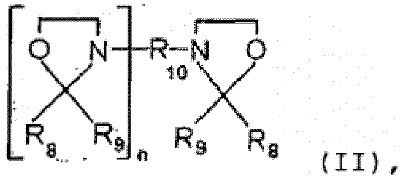 dans laquelle chacun de R8 et R9 est choisi individuellement dans le groupe constitué par l'hydrogène et un groupe alkyle. R10 est un groupe alkylidène, un groupe arylidène ou un groupe arylalkylidène comprenant facultativement au moins deux groupes uréthane ou au moins un ester de carbonate, et n vaut 1, 2, 3 ou 4 ;
(d) au moins un composant acide hydroxycarboxylique qui est un acide gras contenant un groupe hydroxy ayant de 10 à 23 atomes de carbone.

3. Composition hydrofuge selon la revendication 2, comprenant de plus au moins un composé à base de silane de formule (III) : 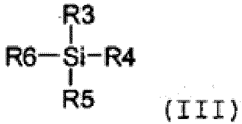 où R3, est un groupe alcoxy ayant 1 à 8 atomes de carbone ; et R4, R5, R6 sont choisis chacun indépendamment dans le groupe constitué par -(R7)ₙ-Z où Z est choisi dans le groupe constitué d'un groupe amino, d'époxy, de mercaptan, d'isocyanate, d'uréido, et d'imidazole, R7 est un groupe aliphatique, alicyclique ou aromatique, et n est de 0 à 20 ; un groupe alcoxy ayant de 1 à 8 atomes de carbone; un groupe alkyle ayant de 1 à 8 atomes de carbone.

4. Composition hydrofuge selon les revendications 2 ou 3, dans laquelle le composant isocyanate est le produit de réaction d'un diisocyanate de méthylène diphényle (MDI) et d'un alcool multifonctionnel.

5. Composition hydrofuge selon l'une des revendications 2 ou 3, dans laquelle le diisocyanate est choisi dans le groupe constitué de 4-méthyl-1,3-phénylène diisocyanate, 2-méthyl-1,3-phénylène diisocyanate, 4,4'-diphénylméthane diisocyanate, 1,3-phénylène diisocyanate, 1,4-phénylène diisocyanate, 1,6-hexaméthylène diisocyanate, 2,2,4-triméthyl-1,6-hexaméthylène diisocyanate, 2,4,4-trimethyl-1,6-hexaméthylène diisocyanate, 1,12-dodécaméthylène diisocyanate, cyclohexane-1,3 diisocyanate, cyclohexane-1,4-diisocyanate, 1-isocyanate-3,3,5-trimethyl-5-isocyanate-méthylcyclohexane, perhydro-2,4'-diphénylméthane diisocyanate, perhydro-4,4'-diphénylméthane diisocyanate, 1,3-etramethylxylylene diisocyanate, 1,4-tétraméthylxylylène diisocyanate et un mélange quelconque des isocyanates précités.

6. Composition hydrofuge selon l'une quelconque des revendications précédentes, dans laquelle l'alcool multifonctionnel est choisi dans le groupe constitué de polyalkylène glycols, néopentyle glycols, glycérol, triméthylol propane, hexane triol, résine alkyde, et de mélanges des alcools polyvalents mentionnés ci-dessus.

7. Composition hydrofuge selon l'une quelconque des revendications 2 à 5, dans laquelle le composant polyol est un composant polyétherol ou polyesterol.

8. Composition hydrofuge selon la revendication 7, dans laquelle le polyétherpolyol ou le composant polyesterol a une masse moléculaire moyenne en poids de 500 à 6000 et comprend en moyenne de 2 à 3 groupes hydroxyle par molécule.

9. Composition hydrofuge selon l'une quelconque des revendications 2 à 8, dans laquelle la quantité de composant polyol est choisie de telle sorte qu'elle constitue de 50 à 80% de l'équivalent total de donneurs d'hydrogène dans la composition totale.

10. Composition hydrofuge selon l'une quelconque des revendications 2 à 9, dans laquelle le composant amine latente est le produit de condensation d'un composé multiamine avec des aldéhydes et/ou cétones.

11. Composition hydrofuge selon l'une quelconque des revendications 2 à 10, dans laquelle la quantité du composant amine latente est choisie de telle sorte qu'elle constitue de 10 à 40% de l'équivalent total de donneurs d'hydrogène dans la composition totale.

12. Composition hydrofuge selon l'une quelconque des revendications précédentes, dans laquelle le component d'acide hydroxycarboxylique est choisi parmi l'acide 12-hydroxy-9-cis-octadécénoïque et l'acide 12-hydroxy-octadécanoïque.

13. Composition hydrofuge selon l'une quelconque des revendications précédentes, dans laquelle la quantité de composant d'acide hydroxycarboxylique est choisie de telle sorte qu'elle constitue de 0,1 à 10% de l'équivalent total de donneurs d'hydrogène dans la composition totale.

14. Composition hydrofuge selon l'une quelconque des revendications précédentes, comprenant en outre des charges organiques et/ou inorganiques, des catalyseurs, des antimousses, des colorants, des pigments, des plastifiants, des huiles, des agents de séchage et/ou des additifs rhéologiques.

15. Composition hydrofuge selon l'une quelconque des revendications 2 à 14, dans laquelle le composant isocyanate est ajouté dans une quantité telle que le rapport des groupes isocyanate sur les donneurs d'hydrogène est de 0,9 à 1,4.

16. Procédé d'imperméabilisation d'une structure en béton, dans lequel une composition hydrofuge selon l'une quelconque des revendications précédentes est appliquée sous la forme d'un liquide sur une structure en béton.
